# EUROPÄISCHE PATENTSCHRIFT

(11) **EP 2 384 848 B1**
(45) Veröffentlichungstag und Bekanntmachung des Hinweises auf die Patenterteilung: **05.09.2012**
(21) Anmeldenummer: 11161453.3
(22) Anmeldetag: 07.04.2011
(51) Int. Cl.: B23P 15/00, F01D 9/02, F02B 37/00, F02B 39/00, F02C 6/12, F01D 25/24

(54) **Verfahren zur Herstellung eines Turboladergehäuses**
Method for manufacturing a turbocharger housing
Procédé de fabrication d'un carter de turbocompresseur

(30) Priorität: 04.05.2010 DE 102010019404
(43) Veröffentlichungstag der Anmeldung: 09.11.2011
(73) Patentinhaber: Benteler Automobiltechnik GmbH, 33102 Paderborn (DE)
(72) Erfinder: Smatloch, Dr. Christian, 33100, Paderborn (DE); Grußmann, Elmar, 33184, Altenbeken (DE); Arlt, Frank, 33161, Hövelhof (DE)
(74) Vertreter: Griepenstroh, Jörg

(56) Entgegenhaltungen:
- EP-A2- 2 180 163
- DE-A1- 4 424 452
- DE-A1- 10 022 052
- DE-U1-202008 002 380
- JP-A- 55 037 508

## Beschreibung

Die Erfindung betrifft ein Verfahren zur Herstellung eines Turboladergehäuses umfassend einen Lagerflansch, der zur Lagerung eines Turbinenrads dient und der wenigstens einer Blechschale des Turboladergehäuses verbunden wird.

Ein solches Verfahren ist aus der DE 10022052A1 bekannt.

Brennkraftmaschinen für Kraftfahrzeuge werden im zunehmenden Maße durch Turbolader aufgeladen, da sich hierdurch effiziente Reduzierungen des Kraftstoffverbrauchs erzielen lassen. Turbolader sind während ihres Einsatzes erheblichen mechanischen und insbesondere höchsten thermischen Belastungen ausgesetzt. Gleichzeitig soll das Gewicht eines solchen Aggregats möglichst gering sein, um sich nicht negativ auf das Gesamtgewicht eines Kraftfahrzeugs und damit nachteilig auf den Kraftstoffverbrauch auszuwirken. Um trotz der hohen Belastungen und dem angestrebten geringen Gewicht eine hinreichende Lebensdauer gewährleisten zu können, wurde in der DE 100 22 052 A1 bereits vorgeschlagen, Auflademaschinen als Blechlösungen zu konzipieren, und die Abgas führenden Bauteile von der tragenden bzw. dichtenden Außenstruktur zu trennen.

In der Praxis zeigt sich jedoch, dass die Umsetzung solcher Turboladerkonzepte in Blechbauweise erhebliche fertigungstechnische Probleme mit sich bringt. Die ebenso zum Stand der Technik gehörenden Gussgehäuse werden mechanisch bearbeitet und erlauben so die Einstellung kleinster Toleranzen auch für den Spalt zwischen dem Turboladergehäuse und dem Turbinenrad. Diese Spaltbreite ist jedoch für die Effektivität des Turboladers von entscheidender Bedeutung. Blechgehäuse genügen dahingegen nur den Toleranzanforderungen der Umformverfahren, wie z. B. dem Tiefziehen oder dem Prägen, wobei die hier erreichten Toleranzen aber um mehrere Größenordnungen größer sind als die des mechanischen, spanabhebenden Bearbeitens. Zusätzlich treten Toleranzerweiterungen auf, die sich durch thermische Fügeprozesse ergeben. Die fertigungstechnisch bedingten Schwankungen der Toleranzen führen dazu, dass Turboladergehäuse in Blechbauweise eine weit größere Streuung der Leistungsdaten haben als Turboladergehäuse in Gussbauweise.

Hiervon ausgehend liegt der Erfindung die Aufgabe zugrunde, ein Verfahren zur Herstellung eines Turboladergehäuses aufzuzeigen, mit weichem es möglich ist, Turboladergehäuse mit engeren Fertigungstoleranzen zu schaffen, und somit die Streuungsbreite der Leistungsdaten derartiger Turbolader zu reduzieren mit dem Ziel, die Turboladereffektivität zu steigern.

Diese Aufgabe wird bei einem Verfahren mit den Merkmalen des Patentanspruchs 1 gelost

Die Unteransprüche betreffen vorteilhafte Weiterbildungen der Erfindung.

Bei dem erfindungsgemäßen Verfahren besitzt das so hergestellte Turboladergehäuse einen Lagerflansch, der zur Lagerung eines Turbinenrads dient, und der mit wenigstens einer Blechschale des Turboladergehäuses verbunden wird. Die Blechschale bildet zusammen mit dem Turbinenrad einen Spalt aus. Im Rahmen der Erfindung ist vorgesehen, dass die Blechschale nach dem Fügen mit dem Lagerflansch hinsichtlich derjenigen Flächen, die einen Spalt zu dem Turbinenrad begrenzen, vermessen wird. Hierbei wird davon ausgegangen, dass das Turbinenrad eine unveränderliche Geometrie besitzt und dass die relative Lage der Blechschale durch die umformtechnisch und fügetechnisch bedingten Toleranzen unterschiedlich zum Lagerflansch beabstandet sein kann. Diese Schwankung des Abstandes ist in der Regel unproblematisch, solange es sich nicht um diejenigen Flächen handelt, die mit dem Turbinenrad einen Spalt begrenzen sollen. Nunmehr wird jedoch der Lagerflansch in Abhängigkeit von dem an der Blechschale gemessenen Messwert spanabhebend bearbeitet und so angepasst, dass die Relativlage des Turbinenrads zum Lagerflansch und damit zur Blechschale eingestellt wird. Mit anderen Worten geht die Erfindung nicht den Weg, die Fertigungsgenauigkeit bei der Umformung der Blechschalen zu erhöhen, sondern die Blechschalen nach dem Umformen und Fügen, also dann, wenn alle ihre Relativlage zum Lagerflansch beeinflussenden Fertigungsschritte abgeschlossen sind, zu vermessen und erst dann die Lage des Turbinenrads an die Lage der Blechschale anzupassen. Bislang ist man den Weg gegangen, dass der Flansch als vorkonfiguriertes Bauteil spanabhebend bearbeitet wurde, danach mit den notwendigen Blechschalen zum Aufbau des Turboladergehäuses verbunden wurde, um anschließend das Turbinenrad, das eine fest vorgegebene Lage zum Lagerflansch einnimmt, einzusetzen.

Mit dem erfindungsgemäßen Verfahren können definierte Spaltmaße zwischen einem Turbinenrad und einem Innensystem eines in Blechbauweise aufgebauten Turboladergehäuses herstellt werden. Dies führt dazu, dass sich auch in der Leichtbauweise bei hoher Fertigungsgenauigkeit eine bestmögliche Effektivität des Turboladersystems erreichen lässt. Zudem wird eine gleichmäßige Leistungsentfaltung über eine in Serie hergestellte Turboladerreihe sichergestellt, so dass die mit diesen Turboladergehäusen versehenen Motoren bzw. Fahrzeuge vergleichbare Leistungen abgeben.

Ein weiterer Vorteil ist, dass durch die Sicherstellung eines kleinsten Minimalspaltes zwischen dem Turbinenrad und der Blechschale des Innensystems eine Berührung dieser Bauteile, ein so genanntes Anstreifen, vermieden werden kann, was sich positiv auf die Dauerhaltbarkeit des Gesamtsystems auswirkt.

Das erfindungsgemäße Verfahren ist bei Turboladergehäusen und bei integrierten Turbolader-Krümmer-Gehäusen anwendbar.

Die Fertigungsqualität kann durch eine abschließende Qualitätskontrolle noch dadurch gesteigert werden, indem nach der Bearbeitung des Lagerflansches der kritische Bereich der Blechschale vorzugsweise mit denselben Messeinrichtungen, in Bezug auf den Lagerflansch, nochmals vermessen wird, so dass eine 100 %-Kontrolle der Qualität vor dem Verbau/der Auslieferung ermöglicht wird.

In vorteilhafter Weiterbildung der Erfindung wird vor der Bearbeitung des Lagerflansches die Lage des Turbinenrades relativ zu seinem Lagergehäuse vermessen, das später mit dem Lagerflansch verbunden wird. Die Position des Turbinenrads relativ zu seinem Lagergehäuse ist toleranzbehaftet. Um diese Toleranzen ausgleichen zu können, wird die Lage des Turbinenrads relativ zu denjenigen Flächen des Lagergehäuses vermessen, die in der Einbaulage an dem Lagerflansch anliegen. Diese Messwerte werden zusätzlich in die Berechnung der Bearbeitung für den Lagerflansch einbezogen, so dass die gesamten Toleranzen des Zusammenbaus weiter minimiert werden können. Es werden also die Toleranzen zwischen dem Turbinenrad und dem Lagergehäuse berücksichtigt.

Ein Problem bei der spanabhebenden Bearbeitung in der Nähe von hinterschnittenen Freiräumen, wie sie bei Turboladergehäusen vorhanden sind, ist der Anfall von Metallspänen. Diese müssen in jedem Fall aus dem Turboladergehäuse entfernt werden. Besser ist es noch, wenn die Späne gar nicht erst in das Innensystem des Turboladergehäuses gelangen. Im Rahmen der Erfindung ist daher vorgesehen, die Bearbeitung des Lagerflansches so durchzuführen, dass die Späne nicht in das Innere des Turboladergehäuses gelangen. Dies kann durch eine entsprechende Positionierung des Lagerflansches während der Bearbeitung erfolgen, durch die Verwendung geeigneter spanabhebender Werkzeuge und insbesondere unter Verwendung von Mitteln zur Spanabfuhr, sei es durch einen gerichteten oder besonders starken Kühl-/Schmiermittelstrahl oder durch geeignete Maßnahmen, um das Innensystem des Turboladergehäuses von dem Lagerflansch abzuschirmen.

Bevorzugt werden daher dem Lagerflansch benachbarte Bereiche des Turboladergehäuses während der spanabhebenden Bearbeitung verschlossen. Hierbei kann es sich um spezielle Einsätze handeln, die wiederverwendet werden können. Denkbar ist aber auch, eine formbare Masse in das Innensystem des Turboladergehäuses einzubringen mit einer beispielsweise wachs- oder schaumähnlichen Konsistenz. Eine solche wachs- oder schaumähnliche Masse kann nach der spanabhebenden Bearbeitung durch einen thermischen und/oder chemischen Prozess aus dem Inneren des Turboladergehäuses entfernt werden, insbesondere durch Ausschmelzen.

Etwaige Metallspäne, die an der formbaren Masse haften, werden dabei gewissermaßen mit ausgespült und aus dem Innensystem ausgetragen.

Die Vermessung der Blechschale kann mittels taktiler Messmittel erfolgen. Ebenso ist auch eine berührungslose Vermessung der Blechschalen durch Scannen der Oberfläche möglich.

Die zu vermessende Blechschale ist bevorzugt Bestandteil einer aus mehreren Blechschalen ausgebildeten Innenstruktur eines doppelwandigen Turboladergehäuses. Die Blechschalen der Innenstruktur werden bevorzugt miteinander verschweißt. Diejenige Blechschale, die mit dem Turbinenrad einen Spalt begrenzt, befindet sich im Abstand von dem Lagerflansch und liegt diesem gewissermaßen gegenüber. Radial umfangsseitig ist diese zu vermessende Blechschale mit einer zweiten Blechschale verschweißt, die wiederum an dem Lagerflansch befestigt ist. Daher ist die zu vermessende Blechschale nur mittelbar mit dem Lagerflansch verbunden. Diese Konstruktionsweise zeigt auf, dass es zu unvermeidbaren Fertigungstoleranzen durch die beiden aufeinander folgenden Fügestellen kommt. Die Fertigungstoleranzen des Lagerflansches, der unmittelbar am Lagerflansch angeordneten Blechschale und der schließlich zu vermessenden Blechschale summieren sich. Diese Toleranzen können durch das erfindungsgemäße Verfahren in vorteilhafterweise kompensiert werden.

Die Erfindung wird nachfolgend anhand eines in den Zeichnungen dargestellten Ausführungsbeispiels erläutert.

Es zeigen:
- Figur 1: einen Querschnitt eines Turboladergehäuses in Blechbauweise mit einer zu vermessenden Blechschale;
- Figur 2: den sich an die Vermessung anschließenden Schritt, in welchem der Lagerflansch des Turboladergehäuses mechanisch bearbeitet wird und
- Figur 3: die Zusammenbausituation des Turboladergehäuses mit eingesetztem Turbinenrad.

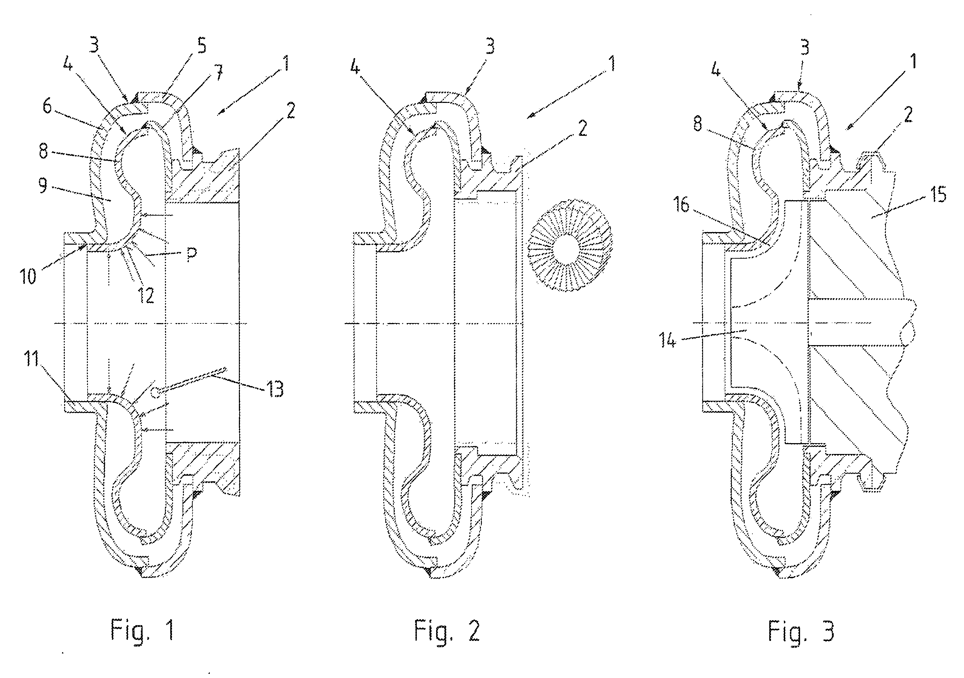

Figur 1 zeigt ein Turboladergehäuse 1 in Blechbauweise. Das Turboladergehäuse 1 besitzt einen tragenden Lagerflansch 2, der mit einem Außensystem 3 und einem Innensystem 4 verbunden ist. Das Außensystem 3 ist ebenso wie das Innensystem 4 aus je zwei umfangsseitig miteinander verschweißten Blechschalen 5, 6, 7, 8 gebildet. Die jeweiligen lagerflanschseitigen Blechschalen 5, 7 sind umfangsseitig an dem Lagerflansch 2 befestigt. In diese beiden Blechschalen 5, 7 greift innenseitig jeweils die vom Lagerflansch 2 abgewandte Lagerschale 6, 8 des Außen- bzw. Innensystems 3, 4. Das Innensystem 4 ist vom Außensystem 3 beabstandet und formt einen Luftspalt 9 zum Außensystem 3. Der Luftspalt 9 dient zur Abschirmung des thermisch hochbelasteten Innensystems 4. Das Außensystem 3 dichtet das Turboladergehäuse 1 ab, während das Innensystem 4 die gewünschten Strömungskanäle ausbildet. Das Innensystem 4 steht auf seiner dem Lagerflansch 2 abgewandten Seite über einen Schiebesitz 10 mit der entsprechenden Blechschale 6 des Außensystems 3 in Verbindung. Im Bereich des Schiebesitzes 10 befindet sich ein Auslassflansch 11 des Turboladergehäuses 1.

Der Lagerflansch 2 ist in der Darstellung der Figur 1 noch unbearbeitet. Es ist innerhalb der Schraffur des Lagerflansches eine punktierte Linie zu erkennen, die der Endkontur des Lagerflansches 2 entsprechen kann. Die genaue Lage dieser Endkontur wird dadurch bestimmt, dass die dem Lagerflansch 2 abgewandte Blechschale 8 des Innensystems 4 im Bereich der mit den Pfeilen P gekennzeichneten Fläche 12 vermessen wird. Die einzelnen Pfeile P verdeutlichen die Lage der hier rein beispielhaft eingezeichneten Messpunkte. Die Messung erfolgt über ein schematisch angedeutetes, taktiles Messmittel 13, das von der Seite des Lagerflansches 2 her in das Turboladergehäuse 1 eingebracht wird. Nach Auswertung der Messpunkte und Bestimmung der relativen Lage der Fläche 12 zum Lagerflansch 2 erfolgt die in Figur 2 schematisch angedeutete spanabhebende Bearbeitung des Lagerflansches 2. Der Lagerflansch 2 wird nun in die in Figur 1 durch die punktierte Linie angedeutete Kontur gebracht, wobei sich der genaue Konturverlauf durch die Lage der Fläche 12 der Blechschale 8 bestimmt.

Figur 3 zeigt schließlich die Zusammenbausituation mit eingesetztem Turbinenrad 14, das über ein Lagergehäuse 15 an dem Lagerflansch 2 gehalten ist.

Bevor das Turbinenrad 14 bzw. das Lagergehäuse 15 des Turbinenrads 14 in den Lagerflansch 2 eingesetzt wird, kann zur Kontrolle der spanabhebend bearbeitete Lagerflansch 2 nochmals vermessen werden, um sicherzustellen, dass sich durch die spanabhebende Bearbeitung nicht zusätzliche Fertigungstoleranzen eingeschlichen haben, bzw. um sicherzustellen, dass das Lagergehäuse 15 mit dem Turbinenrad 14 exakt die angestrebte Position relativ zum Lagerflansch 2 bzw. zu der vermessenen Blechschale 8 des Innensystems 4 einnimmt.

Mit dem erfindungsgemäßen Verfahren ist es in jedem Fall möglich zu gewährleisten, dass kein Turboladergehäuse außerhalb definierter Toleranzen ausgeliefert wird, da aufgrund von Messungen Turboladergehäuse mit extrem abweichender Geometrie ausgesondert werden können. Das gesamte Verfahren kann vorzugsweise mittels einer automatisierten Datenverarbeitungsanlage erfolgen, welche als Eingangsparameter die erfassten Messwerte auswertet und in Abhängigkeit hiervon die Bearbeitungskontur des Lagerflansches 2 berechnet, mit dem Ziel, einen Spalt 16 zwischen dem Turbinenrad 14 und der Fläche 12 exakt einzustellen.

### Bezugszeichen:

- 1 -: Turboladergehäuse
- 2-: Lagerflansch
- 3 -: Außensystem
- 4 -: Innensystem
- 5-: Blechschale
- 6 -: Blechschale
- 7 -: Blechschale
- 8-: Blechschale
- 9-: Luftspalt
- 10-: Schiebesitz
- 11 -: Auslassflansch
- 12-: Fläche
- 13-: Messmittel
- 14-: Turbinenrad
- 15-: Lagergehäuse
- 16-: Spalt

- P -: Pfeil

## Patentansprüche

1. Verfahren zur Herstellung eines Turboladergehäuses (1) umfassend einen Lagerflansch (2), der zur Lagerung eines Turbinenrads (14) dient und der mit wenigstens einer Blechschale (8) des Turboladergehäuses (1) verbunden wird, mit folgenden Schritten:
a) Die Blechschale (8) wird hinsichtlich derjenigen Flächen (12), die einen Spalt (16) zu dem Turbinenrad (14) begrenzen, nach dem Verbinden mit dem Lagerflansch (2) vermessen;
b) Der Lagerflansch (2) wird in Abhängigkeit von den an der Blechschale (8) gemessenen Messwerten spanabhebend bearbeitet, um die Relativlage des Turbinenrads (14) zum Lagerflansch (2) und damit zur Blechschale (8) einzustellen.

2. Verfahren nach Anspruch 1, **dadurch gekennzeichnet, dass** die Lage des Turbinenrads (14) relativ zu am Lagerflansch (2) anliegenden Flächen seines Lagergehäuses (15) vermessen wird und diese Messwerte in die spanabhebende Bearbeitung des Lageflansches (2) mit einbezogen werden.

3. Verfahren nach Anspruch 1 oder 2, **dadurch gekennzeichnet, dass** die mechanische Bearbeitung des Lagerflansches (2) so durchgeführt wird, dass Späne nicht in das Innere des Turboladergehäuses (1) gelangen.

4. Verfahren nach Anspruch 3, **dadurch gekennzeichnet, dass** die dem Lagerflansch (2) benachbarten Bereiche des Turboladergehäuses (1) bei der spanabhebenden Bearbeitung verschlossen werden.

5. Verfahren nach Anspruch 4, **dadurch gekennzeichnet, dass** die dem Lagerflansch (2) benachbarten Bereiche mit einer wachs- oder schaumähnlichen Masse verschlossen sind.

6. Verfahren nach Anspruch 5, **dadurch gekennzeichnet, dass** die wachsoder schaumähnliche Masse nach der spanabhebenden Bearbeitung durch einen thermischen und/oder chemischen Prozess aus dem Inneren des Turboladergehäuses (1) entfernt wird.

7. Verfahren nach einem der Ansprüche 1 bis 6, **dadurch gekennzeichnet, dass** zur Vermessung der Blechschale (8) taktile Messmittel (13) verwendet werden.

8. Verfahren nach einem der Ansprüche 1 bis 6, **dadurch gekennzeichet**, dass die Vermessung der Blechschale (8) berührungslos erfolgt.

9. Verfahren nach einem der Ansprüche 1 bis 8, **dadurch gekennzeichnet, dass** die zu vermessende Blechschale (8) Bestandteil einer aus mehreren Blechschalen (8) ausgebildeten Innenstruktur (4) eines doppelwandigen Turboladergehäuses (1) ist, wobei die Blechschalen (7, 8) der Innenstruktur (4) miteinander verschweißt werden.

10. Verfahren nach einem der Ansprüche 1 bis 9, **dadurch gekennzeichnet, dass** die zu vermessende Blechschale (8) mittelbar über eine weitere Blechschale (7) mit dem Lagerflansch (2) verbunden ist.

## Claims

1. A method for manufacturing a turbocharger housing (1) comprising a bearing flange (2) which serves the bearing of a turbine wheel (14) and which is connected to at least one sheet metal shell (8) of the turbocharger housing (1), having the following steps:
a) After it is connected to the bearing flange (2), the sheet metal shell (8) is measured in regard to those surfaces (12) which delimit a gap (16) to the turbine wheel (14);
b) Depending on the measured values measured on the sheet metal shell (8), the bearing flange (2) is machined to set the relative position of the turbine wheel (14) to the bearing flange (2) and hence to the sheet metal shell (8).

2. The method of claim 1 wherein the position of the turbine wheel (14) relative to surfaces of its bearing housing (15) that are adjacent to the bearing flange (2) is measured, and these measured values too are incorporated in the machining of the bearing flange (2).

3. The method of claim 1 or 2 wherein the mechanical machining of the bearing flange (2) is carried out such that chips do not enter the interior of the turbocharger housing (1).

4. The method of claim 3 wherein the regions of the turbocharger housing (1) neighbouring the bearing flange (2) are sealed off during machining.

5. The method of claim 4 wherein the regions adjacent to the bearing flange (2) are sealed off with a wax-like or foam-like mass.

6. The method of claim 5 wherein the wax-like or foam-like mass is removed from the interior of the turbocharger housing (1) by a thermal and/or chemical process after machining.

7. The method of any one of claims 1 to 6 wherein tactile measuring means (13) are used to measure the sheet metal shell (8).

8. The method of any one of claims 1 to 6 wherein the measuring of the sheet metal shell (8) is effected contactlessly.

9. The method of any one of claims 1 to 8 wherein the sheet metal shell (8) to be measured is part of an internal structure (4) of a double-walled turbocharger housing (1), the internal structure (4) being configured from a plurality of sheet metal shells (8), with the sheet metal shells (7, 8) of the internal structure (4) being welded to one another.

10. The method any one of claims 1 to 9 wherein the sheet metal shell (8) to be measured is indirectly connected by a further sheet metal shell (7) to the bearing flange (2).

## Revendications

1. Procédé pour la fabrication d'un carter de turbocompresseur (1) comprenant une bride de montage (2) qui sert au montage d'un rotor de turbine (14) et qui est reliée à au moins une coque en tôle (8) du carter de turbocompresseur (1), comprenant les étapes suivantes :
a) la coque en tôle (8) est mesurée pour ce qui concerne celles des surfaces (12) qui délimitent une fente (16) vis-à-vis du rotor de turbine (14), après la liaison avec la bride de montage (2) ;
b) la bride de montage (2) est usinée avec enlèvement de matière en fonction des valeurs mesurées sur la coque en tôle (8), afin de de régler la position relative du rotor de turbine (14) par rapport à la bride de montage (2) et ainsi par rapport à la coque en tôle (8).

2. Procédé selon la revendication 1, **caractérisé en ce que** la position du rotor de turbine (14) est mesurée par rapport aux surfaces, de son boîtier de montage (15), qui sont appliquées contre la bride de montage (2), et ces valeurs de mesure sont intégrées dans l'usinage avec enlèvement de matière de la bride de montage (2).

3. Procédé selon la revendication 1 ou 2, **caractérisé en ce que** l'usinage mécanique de la bride de montage (2) est exécuté de telle façon que les copeaux ne parviennent pas dans l'intérieur du carter de turbocompresseur (1).

4. Procédé selon la revendication 3, **caractérisé en ce que** les régions, du carter de turbocompresseur (1), voisines de la bride de montage (2) sont obturées lors de l'usinage avec enlèvement de matière.

5. Procédé selon la revendication 4, **caractérisé en ce que** les régions voisines de la bride de montage (2) sont obturées avec une masse analogue à de la cire ou à une mousse.

6. Procédé selon la revendication 5, **caractérisé en ce que** la masse analogue à de la cire ou à une mousse est retirée de de l'intérieur du carter de turbocompresseur (1), après l'usinage avec enlèvement de matière, par un processus thermique et/ou chimique.

7. Procédé selon l'une des revendications 1 à 6, **caractérisé en ce que** l'on utilise des moyens de mesure tactiles (13) pour la mesure de la coque en tôle (8).

8. Procédé selon l'une des revendications 1 à 6, **caractérisé en ce que** la mesure de la coque en tôle (8) a lieu sans contact.

9. Procédé selon l'une des revendications 1 à 8, **caractérisé en ce que** la coque en tôle (8) à mesurer est une partie constitutive d'une structure intérieure (4), réalisée à partir de plusieurs coques en tôle (8) d'un carter de turbocompresseur (1) à double paroi, et les coques en tôle (7, 8) de la structure intérieure (4) sont soudées les unes aux autres.

10. Procédé selon l'une des revendications 1 à 9, **caractérisé en ce que** la coque en tôle (8) à mesurer est reliée à la bride de montage (2) de manière indirecte via une autre coque en tôle (7).
